# EUROPÄISCHE PATENTSCHRIFT

(11) **EP 3 144 177 B1**
(45) Veröffentlichungstag und Bekanntmachung des Hinweises auf die Patenterteilung: **04.11.2020**
(21) Anmeldenummer: 16182926.2
(22) Anmeldetag: 05.08.2016
(51) Int. Cl.: B60N 2/12, B60N 2/02, B60N 2/235, B60N 2/874

(54) **VERRIEGELUNGSSYSTEM FÜR EINE SITZANORDNUNG EINES KRAFTFAHRZEUGS**
LOCKING SYSTEM FOR A SEAT ASSEMBLY OF A MOTOR VEHICLE
SYSTEME DE VERROUILLAGE D'UN SIEGE D'UN VEHICULE AUTOMOBILE

(30) Priorität: 08.09.2015 DE 102015115035
(43) Veröffentlichungstag der Anmeldung: 22.03.2017
(73) Patentinhaber: Brose Fahrzeugteile SE & Co. Kommanditgesellschaft, Bamberg, 96052 Bamberg (DE)
(72) Erfinder: Müller, Maximilian, 96450 Coburg (DE); Schukalski, Jürgen, 96328 Küps (DE); Kröner, Gregor, 96120 Bischberg (DE)
(74) Vertreter: Gottschald, Jan

(56) Entgegenhaltungen:
- DE-A1-102011 016 646
- DE-C1- 19 961 874

## Beschreibung

Die vorliegende Erfindung betrifft ein Verriegelungssystem für eine Sitzanordnung eines Kraftfahrzeugs gemäß Anspruch 1, eine Sitzanordnung eines Kraftfahrzeugs mit einem solchen Verriegelungssystem gemäß Anspruch 9 sowie ein Verfahren für den Betrieb einer solchen Sitzanordnung gemäß Anspruch 12.

Im Rahmen der Komforterhöhung bei Kraftfahrzeugen kommt der Unterstützung des Bedieners bei der Verstellung der Sitzanordnung des Kraftfahrzeugs besondere Bedeutung zu. Entsprechend sind die heutigen Sitzanordnungen mit einer Vielzahl von Verstellantrieben ausgestattet.

Bekannt ist es beispielsweise, dem Sitzteil einer Sitzanordnung einen Verfahrantrieb zuzuordnen, über den das Sitzteil entsprechend längsverfahrbar ist (DE 10 2011 018 378 A1). Ein besonders komfortables Verfahren des Sitzteils ergibt sich bei der bekannten Anordnung dadurch, dass das Längsverfahren des Sitzteils durch eine Annäherung eines Körperteils an eine Sensoranordnung bewirkt werden kann. Eine andere Anordnung mit Verfahrantrieb ist in der DE 199 61 874 C1 gezeigt.

Mit der bekannten Anordnung lässt sich ein hoher Bedienkomfort dadurch erreichen, dass der Bediener von sämtlichen manuellen Verstellaktivitäten entlastet wird. Dies allerdings nur, sofern es gelingt, in Echtzeit auf die Gestik des Bedieners zu reagieren. Eine verzögerte Reaktion der Anordnung auf die Annäherung des Körperteils des Bedieners führt im ungünstigsten Fall dazu, dass der Bediener auf die Ausführung der motorischen Verstellung der jeweiligen Verstellkomponente warten muss. Dies ist für den beispielhaften Fall der Verstellung eines Sitzteils, die als solche praktisch mühelos und in besonders kurzer Zeit durch den Bediener durchgeführt werden kann, nicht akzeptabel.

Im letztgenannten Fall verkehrt sich die eigentlich komfortsteigernde Wirkung der bekannten Anordnung ins Gegenteil, so dass im Ergebnis sogar eine rein manuell zu verstellende Sitzanordnung einen höheren Bedienkomfort erzeugen würde. Bei einer solchen manuellen Anordnung ist ein Verriegelungssystem zur Realisierung mindestens zweier Verriegelungsstellungen der jeweiligen Verstellkomponente vorgesehen, zwischen denen die Verstellkomponente manuell verstellbar ist. Dieses manuelle Verriegelungssystem, das den Ausgangspunkt für die vorliegende Erfindung bildet, ist zwar robust in der Anwendung, lässt sich in manchen Fällen jedoch nur mit großem Kraftaufwand entriegeln, so dass eine Steigerung des Bedienkomforts wiederum möglich erscheint.

Eine manuelle Verstellbarkeit der Verstellkomponente ist in der DE 10 2011 016 646 A1 offenbart. Dort ist ein motorisch betätigbares Verriegelungssystem mit einem in einer Mittelkonsole befindlichen Bedienelement vorgesehen.

Der Erfindung liegt das Problem zugrunde, das bekannte Verriegelungssystem derart auszugestalten und weiterzubilden, dass der Bedienkomfort mit einfachen konstruktiven Mitteln gesteigert wird.

Das obige Problem wird bei einem Verriegelungssystem mit den Merkmalen von Anspruch 1 gelöst.

Wesentlich ist zunächst die Erkenntnis, dass weder eine rein automatische Verstellung einer Verstellkomponente noch eine rein manuelle Verstellung einer Verstellkomponente einer Sitzanordnung den größtmöglichen Bedienkomfort ermöglichen kann. Es wird vorgeschlagen, lediglich das Entriegeln der Verstellkomponente automatisch durchzuführen und die manuelle Verstellung der Verstellkomponente, ggf. federunterstützt, dem Bediener zu überlassen. Damit ist der Bediener einerseits von der für ihn mühsarnen Entriegelung entlastet. Andererseits kann der Bediener die gewünschte Verstellung mit genau der Geschwindigkeit durchführen, die für ihn optimal ist. Eine solche teilautomatisierte Lösung schafft nicht nur den größtmöglichen Bedienkomfort, sie lässt sich auch mit einfachen konstruktiven Mitteln umsetzen.

Im Einzelnen wird zunächst vorgeschlagen, dass die Sitzanordnung eine manuell in mindestens eine Verriegelungsstellung verstellbare Verstellkomponente, nämlich eine entsprechend verstellbare Rückenlehne, aufweist. Hierfür ist das Verriegelungssystem mit einer entsprechenden Verriegelungsmechanik ausgestattet, wobei die Verstellkomponente in der Verriegelungsstellung bzw. in den Verriegelungsstellungen mittels der Verriegelungsmechanik verriegelbar und entriegelbar ist.

Die Verriegelungsmechanik weist ferner einen Betätigungsantrieb auf, durch den die Verriegelungsmechanik motorisch entriegelbar ist. Die motorische Entriegelung ist bewirkbar durch ein vorbestimmtes Bedienereignis, das über einen Näherungssensor des Verriegelungssystems erfassbar ist. Konkret wird der Näherungssensor durch das vorbestimmte Bedienereignis ausgelöst, was ein Entriegeln der Verstellkomponente über den Betätigungsantrieb bewirkt, so dass die Verstellkomponente vom Bediener, ggf. federgestützt, verstellbar ist.

Mit der vorschlagsgemäßen Lösung kann auf einen Verfahrantrieb für das motorische Verfahren der Verstellkomponente vollständig verzichtet werden, ohne dass der Bedienkomfort eingeschränkt wird. Das bereits führt zu einer besonders einfachen mechanischen Realisierbarkeit der Sitzanordnung insgesamt.

Grundsätzlich kann es vorgesehen sein, dass die Verstellkomponente über den Betätigungsantrieb nicht nur entriegelbar, sondern auch verriegelbar ist. Bei der besonders bevorzugten Ausgestaltung ist es allerdings so, dass die Verriegelung der Verstellkomponente im Rahmen der Verstellung der Verstellkomponente selbsttätig, nämlich durch ein Einrasten der Verriegelungsmechanik, stattfindet. Damit lässt sich der steuerungstechnische Aufbau weiter vereinfachen.

Weitere bevorzugte Ausgestaltungen betreffen Varianten für die Definition des Bedienereignisses. Je nach Auslegung des Näherungssensors kann das Bedienereignis unterschiedlich komplex definiert werden.

Insbesondere für den vorgenannten Fall, dass die Verriegelung auf ein Einrasten der Verriegelungsmechanik zurückgeht, kann es notwendig sein, dass die Verriegelungsmechanik nach dem Auslösen des Näherungssensors rechtzeitig in den Verriegelungszustand zurückfällt. Hier lässt sich ein zeitbasiertes Rückfallen der Verriegelungsmechanik besonders leicht umsetzen.

Eine kostengünstige Ausgestaltung des Betätigungsantriebs zeigt eine Ausgestaltung, nach der das dem Betätigungsmotor nachgeschaltete Getriebe als Zugmittelgetriebe ausgestaltet ist. Hierdurch lässt sich die resultierende Getriebeübersetzung mit geringen Kosten in einem weiten Bereich einstellen.

Nach einer weiteren Lehre, der eigenständige Bedeutung zukommt, wird eine Sitzanordnung eines Kraftfahrzeugs mit einem vorschlagsgemäßen Verriegelungssystem als solche beansprucht.

Die vorschlagsgemäße Sitzanordnung weist entsprechend eine manuell in mindestens eine Verriegelungsstellung verstellbare Verstellkomponente auf, wobei die Verstellkomponente in der Verriegelungsstellung bzw. in den Verriegelungsstellungen mittels der Verriegelungsmechanik verriegelbar und entriegelbar ist. Im Übrigen darf auf alle Erläuterungen zu dem vorschlagsgemäßen Verriegelungssystem verwiesen werden.

Die weiter bevorzugten Ausgestaltungen betreffen Anordnungen des Näherungssensors, die hinsichtlich des Bedienkomforts besonders vorteilhaft sind. Grundsätzlich wird vorgeschlagen, den Näherungssensor in oder an der Verstellkomponente selbst anzuordnen, da der Bediener sich mit einer Hand ohnehin an die Verstellkomponente annähern muss, um die Verstellkomponente nach der Entriegelung manuell zu verstellen. Insoweit ist es besonders vorteilhaft, wenn die motorische Entriegelung abgeschlossen ist, wenn der Bediener die Verstellkomponente kontaktiert.

Wie oben angedeutet, kann die manuelle Verstellung der Verstellkomponente federgestützt vorgesehen sein. Entsprechend wird vorgeschlagen, dass der Verstellkomponente eine entsprechende Federanordnung zur Unterstützung ihrer Verstellung zugeordnet ist. Je nach Ausgestaltung der Federanordnung kann es hier auch vorgesehen sein, dass die Verstellung der Verstellkomponente in einer Verstellrichtung vollständig federgetrieben erfolgt, während die Rückstellung der Verstellkomponente und damit das Spannen der Federanordnung entsprechend manuell durch den Bediener erfolgt.

Nach einer weiteren Lehre, der ebenfalls eigenständige Bedeutung zukommt, wird das beschriebene Verfahren für den Betrieb einer vorschlagsgemäßen Sitzanordnung als solches beansprucht.

Wesentlich für das vorschlagsgemäße Verfahren ist, dass durch das Auslösen des Näherungssensors die Verstellkomponente über den Betätigungsantrieb motorisch entriegelt wird, so dass anschließend eine manuelle Verstellung der Verstellkomponente durch den Bediener möglich ist. Insoweit darf auf alle Ausführungen zum Betrieb der vorschlagsgemäßen Sitzanordnung verwiesen werden.

Interessant ist die bevorzugte Ausgestaltung des Verfahrens, bei der zusätzlich zu der Verstellkomponente eine motorisch verfahrbare Verfahrkomponente vorgesehen ist. Dabei ist es so, dass durch das Auslösen des Näherungssensors nicht nur die Verstellkomponente über den Betätigungsantrieb motorisch entriegelt wird, sondern auch die Verfahrkomponente über den Verfahrantrieb motorisch verfahren wird. Dies kann besonders vorteilhaft bei der sogenannten "Easy-Entry-Funktion" Anwendung finden, bei der zusätzlich zu dem Umklappen einer Rückenlehne einer Sitzanordnung gleichzeitig auch ein Verfahren des Sitzteils der Sitzanordnung nach vorne vorgesehen ist, so dass das Einsteigen des Bedieners im hinteren Sitzbereich vereinfacht wird.

Im Folgenden wird die Erfindung anhand einer lediglich ein Ausführungsbeispiel darstellenden Zeichnung näher erläutert. In der Zeichnung zeigt
- Fig. 1: den Heckbereich eines Kraftfahrzeugs mit einer vorschlagsgemäßen Sitzanordnung in einer ganz schematischen Darstellung,
- Fig. 2: die Entriegelung der Rückenlehne der vorschlagsgemäßen Sitzanordnung a) während einer ersten Phase des Bedienereignisses, b) in einer zweiten Phase des Bedienereignisses und c) während der manuellen Verstellung der Rückenlehne der Sitzanordnung und
- Fig. 3: die Verriegelungsmechanik des Verriegelungssystems der Sitzanordnung gemäß Fig. 1 in einer ganz schematischen Darstellung.

Das in der Zeichnung gezeigte Verriegelungssystem 1 ist einer Sitzanordnung 2 eines Kraftfahrzeugs 3 zugeordnet, die bei dem dargestellten und insoweit bevorzugten Ausführungsbeispiel Bestandteil einer hinteren Sitzreihe ist. Die in Rede stehende Sitzanordnung 2 kann jedoch an beliebiger Stelle des Kraftfahrzeugs 3 angeordnet sein und beispielsweise auch einen Vordersitz des Kraftfahrzeugs 3 bereitstellen.

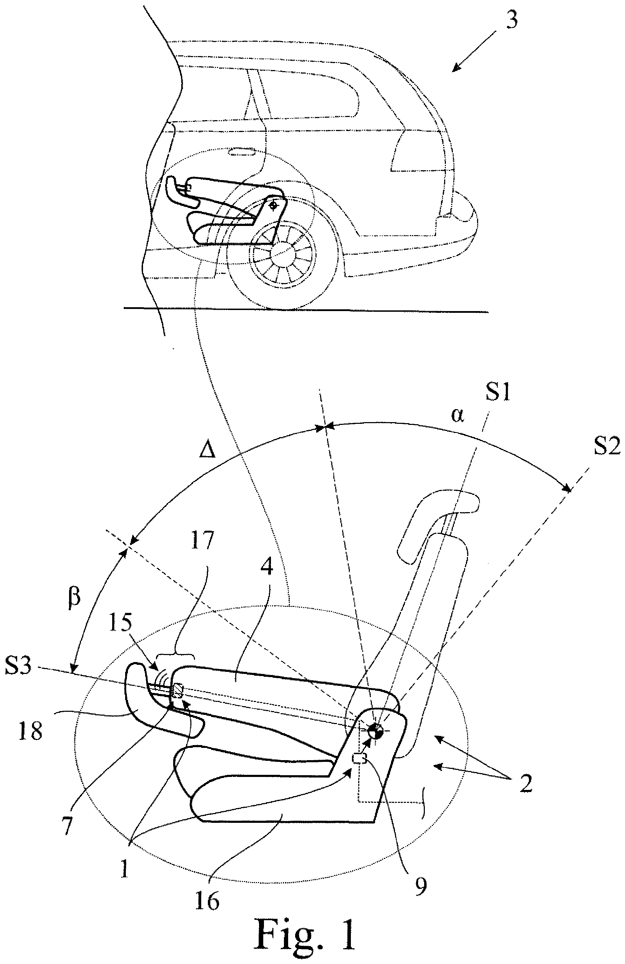

Die Sitzanordnung 2 weist eine Verstellkomponente 4 auf, die sich manuell in mindestens eine Verriegelungsstellung, hier und vorzugsweise zwischen verschiedenen Verriegelungsstellungen, verstellen lässt. Dies ist der Detaildarstellung von Fig. 1 zu entnehmen. Bei der Verstellkomponente 4 kann es sich um irgendeine verstellbare Komponente der Sitzanordnung 2 handeln. Bei dem dargestellten und insoweit bevorzugten Ausführungsbeispiel handelt es sich bei der Verstellkomponente 4 um die Rückenlehne der Sitzanordnung 2. Alle Ausführungen zu der Rückenlehne der Sitzanordnung 2 gelten für alle anderen Varianten für die Verstellkomponente 4 entsprechend.

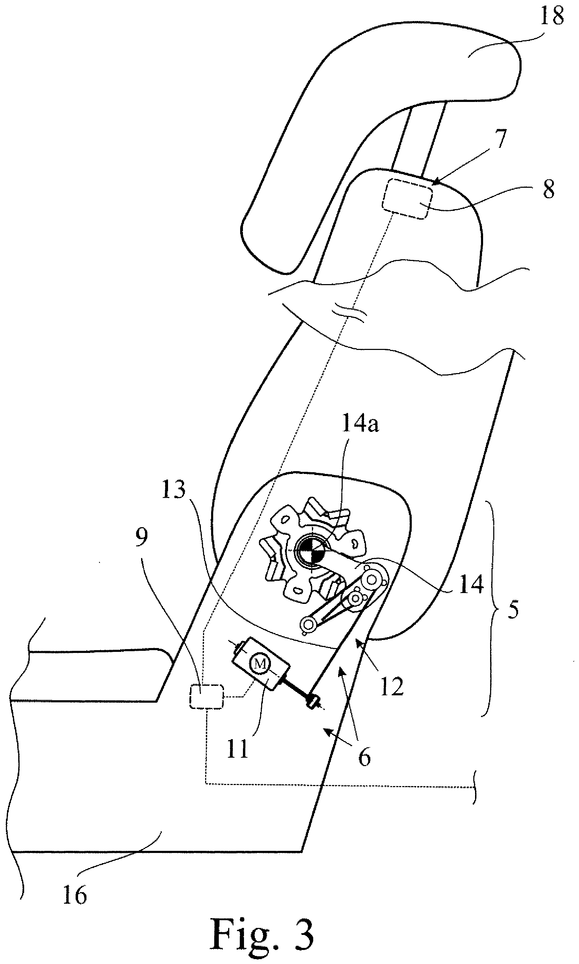

Das Verriegelungssystem 1 ist mit einer Verriegelungsmechanik 5 ausgestattet, deren grundsätzlicher Aufbau der Darstellung gemäß Fig. 3 zu entnehmen ist. Die Funktion der Verriegelungsmechanik 5 besteht darin, dass die Verstellkomponente 4 in den Verriegelungsstellungen in mechanischer Hinsicht verriegelbar und entriegelbar ist. Die Verriegelungsmechanik 5 sorgt also dafür, dass die in einer Verriegelungsstellung verriegelte Verstellkomponente 4 in dieser Verriegelungsstellung verbleibt, bis ein Entriegeln der Verstellkomponente 4 mittels der Verriegelungsmechanik 5 erfolgt.

Die Verriegelungsmechanik 5 weist einen in Fig. 3 dargestellten Betätigungsantrieb 6 auf, durch den die Verriegelungsmechanik 5 motorisch entriegelbar ist. In diesem Zusammenhang darf darauf hingewiesen werden, dass die Entriegelung der Verriegelungsmechanik 5 gleichbedeutend mit der Entriegelung der Verstellkomponente 4 ist.

Wesentlich ist nun, dass das Verriegelungssystem 1 einen Näherungssensor 7 aufweist, der durch ein vorbestimmtes Bedienereignis auslösbar ist. Der Begriff "Näherungssensor" ist vorliegend weit zu verstehen. Er umfasst nicht nur mindestens ein noch zu erläuterndes Näherungssensorelement 8, das der Erzeugung von Sensorsignalen dient, sondern auch eine eventuell vorhandene Auswerteeinheit, in der eine Entscheidung über das Vorliegen des vorbestimmten Bedienereignisses getroffen wird. Das Auslösen des Näherungssensors 7 entspricht vorliegend dem Zustand, in dem das vorbestimmte Bedienereignis vom Näherungssensor 7, insbesondere von der Auswerteeinheit, erfasst worden ist.

Wesentlich ist weiter, dass durch das Auslösen des Näherungssensors 7 die Verstellkomponente 4 über den Betätigungsantrieb 6 motorisch entriegelbar ist. Dies kann über eine direkte Kopplung zwischen dem Näherungssensor 7 und dem Betätigungsantrieb 6 vorgesehen sein. Vorzugsweise ist es allerdings so, dass eine Verriegelungssteuerung 9 vorgesehen ist, die mit dem Näherungssensor 7 einerseits und dem Verstellantrieb 6 andererseits steuerungstechnisch gekoppelt ist. Die Verriegelungssteuerung 9 nimmt auf das Auslösen des Näherungssensors 7 eine entsprechende Ansteuerung des Betätigungsantriebs 6 vor.

Die Funktion des Näherungssensors 7 kann auf ganz unterschiedlichen Sensorprinzipien basieren. Hier und vorzugsweise handelt es sich bei dem Näherungssensor 7 um einen kapazitiven Näherungssensor, der mindestens ein kapazitives Näherungssensorelement 8 aufweist.

Grundsätzlich kann es vorgesehen sein, dass nicht nur das Entriegeln der Verstellkomponente 4, sondern auch das Verriegeln der Verstellkomponente 4 motorisch erfolgt. Hier und vorzugsweise ist die Verriegelungsmechanik 5 allerdings als rastende Mechanik ausgestaltet derart, dass eine Verstellung der Verstellkomponente 4 in eine Verriegelungsstellung mit einem Einrasten der Verriegelungsmechanik 5 in ihren Verriegelungszustand einhergeht.

Bei dem dargestellten und insoweit bevorzugten Ausführungsbeispiel erlaubt die Verriegelungsmechanik 5 eine Verriegelung der Verstellkomponente 4 in mehr als zwei Verriegelungsstellungen. Dies bedeutet, dass mindestens zwei Verstellbereiche existieren, die jeweils zwischen zwei Verriegelungsstellungen liegen. Es lässt sich der Detaildarstellung von Fig. 1 entnehmen, dass die Verriegelungsmechanik 5 eine Verriegelung der Verstellkomponente 4 in den drei Verriegelungsstellungen S₁, S₂ und S₃ erlaubt. Dabei handelt es sich bei der Verriegelungsstellung S₁ um die vorderste Komfort-Verriegelungsstellung und bei der Verriegelungsstellung S₂ um die hinterste Komfort-Verriegelungsstellung, wobei die tatsächliche Komfort-Verriegelungsstellung an die Körpergröße des Bedieners angepasst werden kann. Bei der Verriegelungsstellung S₃ handelt es sich schließlich um eine Beladestellung, mit der regelmäßig eine zusätzliche Ladefläche erzeugbar ist.

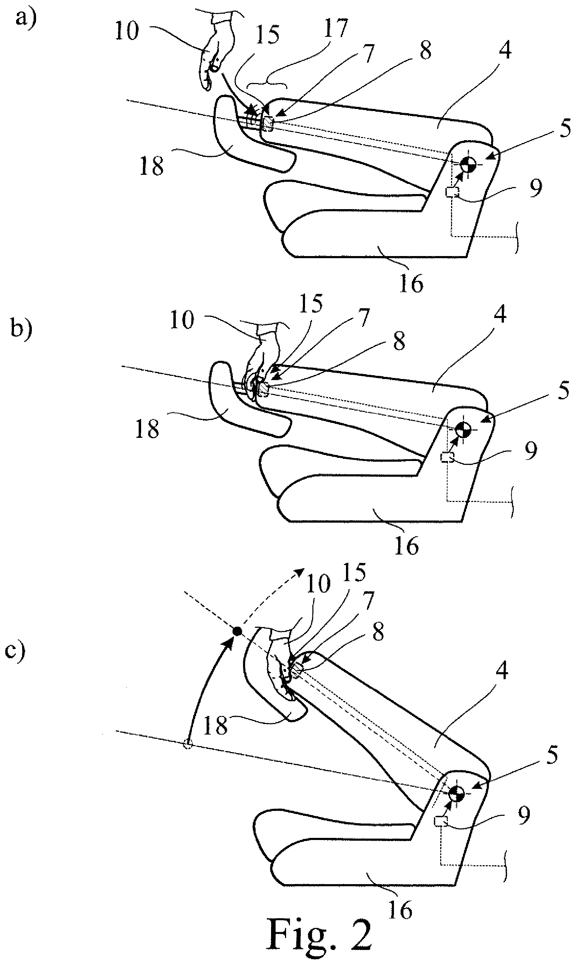

Eine besonders intuitive Bediensystematik ergibt sich nach einer bevorzugten Ausgestaltung dadurch, dass das Bedienereignis als eine Annäherung eines Körperteils, hier einer Hand 10 des Bedieners an den Näherungssensor 7 definiert ist. Die Annäherung der Hand 10 des Bedieners an den Näherungssensor 7 ergibt sich aus dem Übergang von Fig. 2a auf Fig. 2b. Vorzugsweise ist die Anordnung so getroffen, dass das Entriegeln abgeschlossen ist, bevor die Hand 10 des Bedieners in Kontakt mit der Verstellkomponente 4 kommt, so dass die manuelle Verstellung der Verstellkomponente 4, hier aus der Beladestellung der Rückenlehne heraus, verzögerungsfrei erfolgen kann. Die manuelle Verstellung der Rückenlehne ist in Fig. 2c gezeigt.

Um Fehlauslösungen des Näherungssensors 7 zu vermeiden, ist es vorzugsweise vorgesehen, dass die Definition des Bedienereignisses das Übersteigen einer vorbestimmten Annäherungsgeschwindigkeit umfasst. Damit ist beispielsweise sichergestellt, dass ein versehentliches Durchlaufen des Erfassungsbereichs des Näherungssensors 7 mit geringer Annäherungsgeschwindigkeit nicht als Bedienereignis erfasst wird.

Alternativ oder zusätzlich kann es vorgesehen sein, dass die Definition des Bedienereignisses das Übersteigen einer vorbestimmten Verweildauer des Körperteils, hier der Hand, des Bedieners im Erfassungsbereich des Näherungssensors 7 umfasst. Dadurch ist eine weitere Sicherheit dafür geschaffen worden, dass ein versehentliches Durchlaufen des Erfassungsbereichs des Näherungssensors 7 nicht als Bedienereignis erfasst wird.

Weiter alternativ oder zusätzlich kann es vorgesehen sein, dass die Definition des Bedienereignisses eine Berührung des Näherungssensors 7 oder einer Abdeckung des Näherungssensors 7 durch ein Körperteil, hier die Hand, des Bedieners umfasst. Damit lassen sich Fehlauslösungen weitgehend ausschließen. Allerdings muss dafür gesorgt werden, dass das Entriegeln der Verstellkomponente 4 rechtzeitig erfolgt, um die manuelle Verstellung durch den Bediener nicht zu behindern.

Je nach mechanischer Ausgestaltung der Verriegelungsmechanik 5 kann es vorteilhaft sein, dass die im Entriegelungszustand befindliche Verriegelungsmechanik 5 unter einer Rückfallbedingung selbsttätig in den Verriegelungszustand zurückfällt. Beispielsweise kann es sich bei der Rückfallbedingung um den Ablauf einer vorbestimmten Zeitdauer seit dem Auslösen des Näherungssensors 7 handeln. Ein solches Rückfallen der Verriegelungsmechanik 5 ist insbesondere vorteilhaft, wenn die Verriegelungsmechanik 5 wie oben angesprochen, rastend ausgestaltet ist.

Es lässt sich der Darstellung gemäß Fig. 3 entnehmen, dass der Betätigungsantrieb 6 einen Betätigungsmotor 11 und ein dem Betätigungsmotor 11 nachgeschaltetes Getriebe 12 aufweist. Bei einer entsprechenden Getriebeübersetzung lässt sich der Betätigungsmotor 11 vergleichsweise schwach und damit kostengünstig auslegen. Eine mechanisch robuste und gleichzeitig kostengünstige Ausgestaltung des Getriebes zeigt die Darstellung gemäß Fig. 3. Hier ist das Getriebe 12 als Zugmittelgetriebe mit einem flexiblen Zugmittel 13, hier und vorzugsweise als Seilzuggetriebe, ausgeschaltet. Bei dem dargestellten und insoweit bevorzugten Ausführungsbeispiel ist das Zugmittelgetriebe nach Art eines Flaschenzugs, hier und vorzugsweise nach Art eines zweistufigen Flaschenzugs, ausgestaltet. Ganz allgemein kann es sich bei dem Flaschenzug aber um einen Ein- oder mehrstufigen Flaschenzug handeln.

Das flexible Zugmittel 13 ist vorzugsweise als Seil ausgestaltet. Alternativ kann das flexible Zugmittel aber auch als Band mit flachem Querschnitt oder als Kette mit mehreren Kettengliedern ausgestaltet sein. Insbesondere bei der Ausgestaltung des Zugmittels als Seil oder Band lassen sich die Laufgeräusche des Betätigungsantriebs 6 bei robustem mechanischem Aufbau gering halten.

Die Verriegelungsmechanik 5 ist hier und vorzugsweise mit einem Entriegelungshebel 14 ausgestattet, der zum Entriegeln der Verstellkomponente 4, in Fig. 3 im Uhrzeigersinn, mittels des Betätigungsantriebs 6 um die Schwenkachse 14a ausgelenkt wird.

Nach einer weiteren Lehre, der eigenständige Bedeutung zukommt, wird die Sitzanordnung 2 des Kraftfahrzeugs 3, die mit einem vorschlagsgemäßen Verriegelungssystem 1 ausgestattet ist, als solche beansprucht. Auf alle Ausführungen zu dem vorschlagsgemäßen Verriegelungssystem 1 darf verwiesen werden.

Bei der vorschlagsgemäßen Sitzanordnung 2 kommt der Anordnung des Näherungssensors 7 ganz besondere Bedeutung zu. Hier und vorzugsweise ist es vorgesehen, dass der Näherungssensor 7 in oder an der Verstellkomponente 4 selbst angeordnet ist. Wie in Fig. 2 gezeigt, ist der Näherungssensor 7 vorzugsweise in einem Griffbereich 15 der Verstellkomponente 4 für deren manuellen Verstellung angeordnet. Es handelt sich also um den Griffbereich 15, den der Bediener ohnehin intuitiv für die manuelle Verstellung der Verstellkomponente 4 ergreifen würde. Insoweit ergibt sich eine besonders intuitive Bedienmethodik.

Wie weiter oben angesprochen, ist die Verstellkomponente 4 als verstellbare Rückenlehne ausgestaltet, wobei der Näherungssensor 7 an dem dem Sitzteil 16 der Sitzanordnung 2 abgewandten Endbereich 17 der Rückenlehne angeordnet ist. Dies entspricht wiederum der grundsätzlichen Idee, den Näherungssensor 7 an einer Stelle anzuordnen, die der Bediener für die manuelle Verstellung der Verstellkomponente 4 ohnehin ergreifen würde.

Ein besonders hoher Bedienkomfort lässt sich dadurch erreichen, dass der Verstellkomponente 4 eine nicht dargestellte Federanordnung zur Unterstützung ihrer manuellen Verstellung zugeordnet ist. Dabei ist es vorzugsweise so, dass zumindest aus einer Verriegelungsstellung heraus das motorische Entriegeln der Verriegelungsmechanik 5 ein federgetriebenes Aufspringen der Verstellkomponente 4 bewirkt.

Bei der dargestellten und insoweit bevorzugten Sitzanordnung 2 ist es so, dass die Verstellkomponente 4, hier die Rückenlehne, nur in dem in Fig. 1 gezeigten Δ-Verstellbereich frei von der Federanordnung verstellbar ist. Um von dem Δ-Verstellbereich in die Verriegelungsstellung S₃ zu gelangen, muss die Federanordnung über den β-Verstellbereich gespannt werden. Bei einem anschließenden Entriegeln springt die Verstellkomponente 4 in Fig. 1 im Uhrzeigersinn auf, was den manuellen Verstellvorgang vereinfacht.

Für das Erreichen der Verriegelungsstellung S₁ sowie der Verriegelungsstellung S₂ ist wiederum die Federanordnung über zumindest einen Teil des α-Verstellbereichs zu spannen, was wiederum zu einem entsprechenden Aufspringen der Verstellkomponente 4 beim Entriegeln führt. Andere Ausgestaltungen der Federanordnung sind denkbar.

Nach einer weiteren Lehre, der ebenfalls eigenständige Bedeutung zukommt, wird das beschriebene Verfahren für den Betrieb einer vorschlagsgemäßen Sitzanordnung 2 als solches beansprucht. Wesentlich dabei ist die Tatsache, dass durch das Auslösen des Näherungssensors 7 die Verstellkomponente 4 über den Betätigungsantrieb 6 motorisch entriegelt wird, so dass eine anschließende manuelle Verstellung der Verstellkomponente 4 möglich ist. Wiederum darf auf alle Ausführungen zu dem Betrieb der vorschlagsgemäßen Sitzanordnung 2 verwiesen werden.

In einer besonders bevorzugten Variante des vorschlagsgemäßen Verfahrens ist es vorgesehen, dass die Sitzanordnung 2 eine motorisch verfahrbare Verfahrkomponente aufweist, der ein nicht dargestellter Verfahrantrieb zugeordnet ist. Durch das Auslösen des Näherungssensors 7 wird die Verfahrkomponente über den Verfahrantrieb motorisch verfahren. In besonders bevorzugter Ausgestaltung handelt es sich dann bei der Verstellkomponente 4 um die Rückenlehne der Sitzanordnung 2, während es sich bei der Verfahrkomponente um ein Sitzteil der Sitzanordnung 2 handelt. Durch das synchronisierte Entriegeln und Verfahren von Rückenlehne einerseits und Sitzteil andererseits lässt sich auf besonders elegante Weise die weiter oben bereits angesprochene "Easy-Entry-Funktion" umsetzen.

## Patentansprüche

1. Verriegelungssystem für eine Sitzanordnung (2) eines Kraftfahrzeugs (3), die eine manuell in mindestens eine Verriegelungsstellung verstellbare Verstellkomponente (4), die als verstellbare Rückenlehne ausgestaltet ist, aufweist, wobei das Verriegelungssystem (1) eine Verriegelungsmechanik (5) aufweist und wobei die Verstellkomponente (4) in der Verriegelungsstellung mittels der Verriegelungsmechanik (5) verriegelbar und entriegelbar ist, wobei die Verriegelungsmechanik (5) einen Betätigungsantrieb (6) aufweist, durch den die Verriegelungsmechanik (5) motorisch entriegelbar ist,
**dadurch gekennzeichnet,**
**dass** das Verriegelungssystem (1) einen Näherungssensor (7) aufweist, der durch ein vorbestimmtes Bedienereignis auslösbar ist, dass durch das Auslösen des Näherungssensors (7) die Verstellkomponente (4) über den Betätigungsantrieb (6) motorisch entriegelbar ist und dass der Näherungssensor (7) dazu geeignet ist, an einem dem Sitzteil (16) der Sitzanordnung (2) abgewandten Endbereich der als verstellbare Rückenlehne ausgestalteten Verstellkomponente (4) angeordnet zu sein.

2. Verriegelungssystem nach Anspruch 1, **dadurch gekennzeichnet, dass** der Näherungssensor (7) mindestens ein kapazitives Näherungssensorelement (8) aufweist.

3. Verriegelungssystem nach Anspruch 1 oder 2, **dadurch gekennzeichnet, dass** die Verriegelungsmechanik (5) als rastende Mechanik ausgestaltet ist derart, dass eine Verstellung der Verstellkomponente (4) in die Verriegelungsstellung mit einem Einrasten der Verriegelungsmechanik (5) in ihren Verriegelungszustand einhergeht.

4. Verriegelungssystem nach einem der vorhergehenden Ansprüche, **dadurch gekennzeichnet, dass** das Bedienereignis als eine Annäherung eines Körperteils, insbesondere einer Hand (10), des Bedieners an den Näherungssensor (7) definiert ist, vorzugsweise, dass die Definition des Bedienereignisses das Übersteigen einer vorbestimmten Annäherungsgeschwindigkeit umfasst.

5. Verriegelungssystem nach Anspruch 4, **dadurch gekennzeichnet, dass** die Definition des Bedienereignisses das Übersteigen einer vorbestimmten Verweildauer des Körperteils des Bedieners im Erfassungsbereich des Näherungssensors (7) umfasst.

6. Verriegelungssystem nach einem der vorhergehenden Ansprüche, **dadurch gekennzeichnet, dass** die Definition des Bedienereignisses eine Berührung des Näherungssensors (7) oder einer Abdeckung des Näherungssensors (7) durch ein Körperteil, insbesondere eine Hand (10), des Bedieners umfasst.

7. Verriegelungssystem nach einem der vorhergehenden Ansprüche, **dadurch gekennzeichnet, dass** die im Entriegelungszustand befindliche Verriegelungsmechanik (5) unter einer Rückfallbedingung selbsttätig in den Verriegelungszustand zurückfällt, vorzugsweise, dass die Rückfallbedingung der Ablauf einer vorbestimmten Zeitdauer seit dem Auslösen des Näherungssensors (7) ist.

8. Verriegelungssystem nach einem der vorhergehenden Ansprüche, **dadurch gekennzeichnet, dass** der Betätigungsantrieb (6) einen Betätigungsmotor (11) und ein dem Betätigungsmotor (11) nachgeschaltetes Getriebe (12) aufweist, vorzugsweise, dass das Getriebe (12) als Zugmittelgetriebe, insbesondere als Seilzuggetriebe, ausgestaltet ist, weiter vorzugsweise, dass das Zugmittelgetriebe nach Art eines ein- oder mehrstufigen Flaschenzugs ausgestaltet ist.

9. Sitzanordnung eines Kraftfahrzeugs mit einem Verriegelungssystem (1) nach einem der vorhergehenden Ansprüche, wobei die Sitzanordnung (2) eine manuell in mindestens eine Verriegelungsstellung verstellbare Verstellkomponente (4), die als verstellbare Rückenlehne ausgestaltet ist, aufweist, wobei das Verriegelungssystem (1) eine Verriegelungsmechanik (5) aufweist und wobei die Verstellkomponente (4) in der Verriegelungsstellung mittels der Verriegelungsmechanik (5) verriegelbar und entriegelbar ist und wobei der Näherungssensor (7) an einem dem Sitzteil (16) der Sitzanordnung (2) abgewandten Endbereich der als verstellbare Rückenlehne ausgestalteten Verstellkomponente (4) angeordnet ist.

10. Sitzanordnung nach Anspruch 9, **dadurch gekennzeichnet, dass** der Näherungssensor in oder an der Verstellkomponente (4) angeordnet ist, vorzugsweise, dass der Näherungssensor (7) in einem Griffbereich der Verstellkomponente (4) für deren manuelle Verstellung angeordnet ist.

11. Sitzanordnung nach einem der Ansprüche 9 oder 10, **dadurch gekennzeichnet, dass** der Verstellkomponente (4) eine Federanordnung zur Unterstützung ihrer manuellen Verstellung zugeordnet ist, vorzugsweise, dass zumindest aus einer Verriegelungsstellung heraus das motorische Entriegeln der Verriegelungsmechanik ein federgetriebenes Aufspringen der Verstellkomponente (4) bewirkt.

12. Verfahren für den Betrieb einer Sitzanordnung nach einem der Ansprüche 9 bis 11, **dadurch gekennzeichnet, dass** durch das Auslösen des Näherungssensors (7) die Verstellkomponente (4) über den Betätigungsantrieb (6) motorisch entriegelt wird.

13. Verfahren nach Anspruch 12, **dadurch gekennzeichnet, dass** die Sitzanordnung (2) eine motorisch verfahrbare Verfahrkomponente aufweist, der ein Verfahrantrieb zugeordnet ist und dass durch das Auslösen des Näherungssensors (7) die Verfahrkomponente über den Verfahrantrieb motorisch verfahren wird, vorzugsweise, dass die Verstellkomponente (4) eine Rückenlehne der Sitzanordnung (2) ist und dass die Verfahrkomponente ein Sitzteil (16) der Sitzanordnung (2) ist.

## Claims

1. Locking system for a seat arrangement (2) of a motor vehicle (3), which seat arrangement has an adjustment component (4) which is adjustable manually into at least one locking position and which is designed as an adjustable backrest, wherein the locking system (1) has a locking mechanism (5), and wherein the adjustment component (4) is lockable and releasable in the locking position by means of the locking mechanism (5), wherein the locking mechanism (5) has an actuation drive (6) by means of which the locking mechanism (5) is releasable in a motorized manner,
**characterized**
**in that** the locking system (1) has a proximity sensor (7) which is triggerable by a predefined operator control event, in that, by means of the triggering of the proximity sensor (7), the adjustment component (4) is releasable in a motorized manner via the actuation drive (6), and in that the proximity sensor (7) is suitable to be arranged on an end region of the adjustment component (4) designed as an adjustable backrest, said end region facing away from the seat part (16) of the seat arrangement (2).

2. Locking system according to Claim 1, **characterized in that** the proximity sensor (7) has at least one capacitive proximity sensor element (8).

3. Locking system according to Claim 1 or 2, **characterized in that** the locking mechanism (5) is designed as a latching mechanism in such a manner that an adjustment of the adjustment component (4) into the locking position is associated with latching of the locking mechanism (5) into its locking state.

4. Locking system according to one of the preceding claims, **characterized in that** the operator control event is defined as an approach of a body part, in particular a hand (10), of the operator, to the proximity sensor (7), preferably **in that** the definition of the operator control event comprises the exceeding of a predefined approach speed.

5. Locking system according to Claim 4, **characterized in that** the definition of the operator control event comprises the exceeding of a predefined residence period of the body part of the operator within the detection range of the proximity sensor (7).

6. Locking system according to one of the preceding claims, **characterized in that** the definition of the operator control event comprises contact of the proximity sensor (7) or covering of the proximity sensor (7) by a body part, in particular a hand (10), of the operator.

7. Locking system according to one of the preceding claims, **characterized in that** the locking mechanism (5) in the release state automatically falls back under a fall back condition into the locking state, preferably in that the fall back condition is the expiry of a predefined period of time since the triggering of the proximity sensor (7).

8. Locking system according to one of the preceding claims, **characterized in that** the actuation drive (6) has an actuation motor (11) and a gearing (12) connected downstream of the actuation motor (11), preferably **in that** the gearing (12) is designed as a traction element gearing, in particular as a cable pull gearing, furthermore preferably **in that** the traction element gearing is designed in the manner of a single-or multi-stage block and tackle.

9. Seat arrangement of a motor vehicle with a locking system (1) according to one of the preceding claims, wherein the seat arrangement (2) has an adjustment component (4) which is adjustable manually into at least one locking position and which is designed as an adjustable backrest, wherein the locking system (1) has a locking mechanism (5), and wherein the adjustment component (4) is lockable and releasable in the locking position by means of the locking mechanism (5), and wherein the proximity sensor (7) is arranged on an end region of the adjustment component (4) designed as an adjustable backrest, said end region facing away from the seat part (16) of the seat arrangement (2).

10. Seat arrangement according to Claim 9, **characterized in that** the proximity sensor is arranged in or on the adjustment component (4), preferably **in that** the proximity sensor (7) is arranged in a handle region of the adjustment component (4) for the manual adjustment of the latter.

11. Seat arrangement according to either of Claims 9 and 10, **characterized in that** the adjustment component (4) is assigned a spring arrangement for assisting its manual adjustment, preferably **in that** the motorized release of the locking mechanism brings about a spring-driven springing open of the adjustment component (4) at least from a locking position.

12. Method for operating a seat arrangement according to one of Claims 9 to 11, **characterized in that**, by the triggering of the proximity sensor (7), the adjustment component (4) is released in a motorized manner via the actuation drive (6).

13. Method according to Claim 12, **characterized in that** the seat arrangement (2) has a travel component which is movable in a motorized manner and is assigned a travel drive, and **in that**, by the triggering of the proximity sensor (7), the travel component is moved in a motorized manner via the travel drive, preferably **in that** the adjustment component (4) is a backrest of the seat arrangement (2), and **in that** the travel component is a seat part (16) of the seat arrangement (2).

## Revendications

1. Système de verrouillage pour un agencement de siège (2) d'un véhicule automobile (3), qui présente un composant de réglage (4) réglable manuellement dans au moins une position de verrouillage, lequel est configuré sous forme de dossier réglable, le système de verrouillage (1) présentant un mécanisme de verrouillage (5) et le composant de réglage (4) pouvant être verrouillé et déverrouillé dans la position de verrouillage au moyen du mécanisme de verrouillage (5), le mécanisme de verrouillage (5) présentant un entraînement d'actionnement (6) par le biais duquel le mécanisme de verrouillage (5) peut être déverrouillé de manière motorisée,
**caractérisé en ce que**
le système de verrouillage (1) présente un capteur de proximité (7) qui peut être déclenché par un événement de commande prédéterminé, **en ce que** le composant de réglage (4) peut être déverrouillé de manière motorisée par le biais de l'entraînement d'actionnement (6) par le déclenchement du capteur de proximité (7) et **en ce que** le capteur de proximité (7) est apte à être disposé au niveau d'une région d'extrémité, opposée à la partie de siège (16) de l'agencement de siège (2), du composant de réglage (4) réalisé sous forme de dossier réglable.

2. Système de verrouillage selon la revendication 1, **caractérisé en ce que** le capteur de proximité (7) présente au moins un élément de capteur de proximité capacitif (8).

3. Système de verrouillage selon la revendication 1 ou 2, **caractérisé en ce que** le mécanisme de verrouillage (5) est configuré sous forme de mécanisme d'encliquetage de telle sorte qu'un réglage du composant de réglage (4) dans la position de verrouillage soit associé à un enclenchement du mécanisme de verrouillage (5) dans son état de verrouillage.

4. Système de verrouillage selon l'une quelconque des revendications précédentes, **caractérisé en ce que** l'événement de commande est défini comme un rapprochement d'une partie du corps, en particulier d'une main (10), de l'opérateur par rapport au capteur de proximité (7), de préférence **en ce que** la définition de l'événement de commande comprend le dépassement d'une vitesse de rapprochement prédéterminée.

5. Système de verrouillage selon la revendication 4, **caractérisé en ce que** la définition de l'événement de commande comprend le dépassement d'une durée de séjour prédéterminée de la partie du corps de l'opérateur dans la région de détection du capteur de proximité (7).

6. Système de verrouillage selon l'une quelconque des revendications précédentes, **caractérisé en ce que** la définition de l'événement de commande comprend un contact avec le capteur de proximité (7) ou un recouvrement du capteur de proximité (7) par une partie du corps, en particulier une main (10) de l'opérateur.

7. Système de verrouillage selon l'une quelconque des revendications précédentes, **caractérisé en ce que** le mécanisme de verrouillage (5) se trouvant dans l'état de déverrouillage revient automatiquement dans l'état de verrouillage dans une condition de retour, de préférence **en ce que** la condition de retour est l'écoulement d'une durée prédéterminée à partir du déclenchement du capteur de proximité (7).

8. Système de verrouillage selon l'une quelconque des revendications précédentes, **caractérisé en ce que** l'entraînement d'actionnement (6) présente un moteur d'actionnement (11) et une transmission (12) montée en aval du moteur d'actionnement (11), de préférence **en ce que** la transmission (12) est réalisée sous forme de transmission à moyen de traction, en particulier sous forme de transmission à câble de traction, de préférence en outre **en ce que** la transmission à moyen de traction est réalisée à la manière d'un palan à un ou plusieurs étages.

9. Agencement de siège d'un véhicule automobile comprenant un système de verrouillage (1) selon l'une quelconque des revendications précédentes, l'agencement de siège (2) présentant un composant de réglage (4) réglable manuellement dans au moins une position de verrouillage, lequel est configuré sous forme de dossier réglable, le système de verrouillage (1) présentant un mécanisme de verrouillage (5) et le composant de réglage (4) pouvant être verrouillé et déverrouillé dans la position de verrouillage au moyen du mécanisme de verrouillage (5), et le capteur de proximité (7) étant disposé au niveau d'une région d'extrémité, opposée à la partie de siège (16) de l'agencement de siège (2), du composant de réglage (4) réalisé sous forme de dossier réglable.

10. Agencement de siège selon la revendication 9, **caractérisé en ce que** le capteur de proximité est disposé dans ou sur le composant de réglage (4), de préférence **en ce que** le capteur de proximité (7) est disposé dans une région de préhension du composant de réglage (4) en vue de son réglage manuel.

11. Agencement de siège selon l'une quelconque des revendications 9 ou 10, **caractérisé en ce que** le composant de réglage (4) est associé à un agencement de ressort pour assister son réglage manuel, de préférence en ce qu'au moins à partir d'une position de verrouillage le déverrouillage motorisé du mécanisme de verrouillage provoque un saut du composant de réglage (4) provoqué par le ressort.

12. Procédé pour le fonctionnement d'un agencement de siège selon l'une quelconque des revendications 9 à 11, **caractérisé en ce que** le composant de réglage (4) est déverrouillé de manière motorisée par le biais de l'entraînement d'actionnement (6) par le déclenchement du capteur de proximité (7).

13. Procédé selon la revendication 12, **caractérisé en ce que** l'agencement de siège (2) présente un composant de déplacement déplaçable de manière motorisée, auquel est associé un entraînement de conduite et **en ce que** par le déclenchement du capteur de proximité (7), le composant de déplacement est déplacé de manière motorisée par le biais de l'entraînement de déplacement, de préférence **en ce que** le composant de réglage (4) est un dossier de l'agencement de siège (2) et **en ce que** le composant de déplacement est une partie de siège (16) de l'agencement de siège (2).
